# EUROPEAN PATENT APPLICATION

(11) **EP 4 096 066 A1**
(43) Date of publication of application: **30.11.2022**
(21) Application number: 21176715.7
(22) Date of filing: 28.05.2021
(51) Int. Cl.: H02K 7/00, H02K 9/19, H02K 1/32

(54) **ELECTRIC MOTOR WITH AN IMPROVED COOLING**

(71) Applicant: BRUSA Elektronik AG, 9466 Sennwald (CH)
(72) Inventor: Kerschbaumer, Michael, Feldkirch (AT)
(74) Representative: Rösler Rasch van der Heide & Partner

(57) **Abstract**

The invention relates to an electric motor comprising a housing, a stator arranged in the housing, a rotor shaft mounted in the housing and configured for rotating around a rotor axis, magnetic components, in particular electromagnetic coils or permanent magnets, arranged on an outer radial surface of the rotor shaft, wherein the rotor shaft comprises a first channel centrically extending on the rotor axis, and an inlet configured for feeding the first channel with coolant, wherein the electric motor comprises at least one outlet configured for discharging the coolant.

## Description

### FIELD OF THE INVENTION

The present invention relates to an electric motor and, in particular, to a cooling of an electric motor.

### BACKGROUND OF THE INVENTION

In the automotive sector and similar industries the demand for high-performance and/or highly efficient electric motors is increasing. Heat dissipation is therefore one of the important aspects of ongoing developments in this field. At the same time, engineers seek for more compactness and weight reduction of the motor. Special materials used in the motor, for example rare earths, are often sensitive to heat and thus amplify the need for a cooling that is more integrated, smaller in size, and more effective in the removal of heat.

### OBJECT OF THE INVENTION

The present invention provides an electric motor with an improved cooling. While being more compact and more integrated, the cooling provides a more effective cooling structure and a lighter, simpler design.

### SUMMARY OF THE INVENTION

The invention relates to an electric motor comprising a housing, a stator arranged in the housing, a rotor shaft mounted in the housing and configured for rotating around a rotor axis, magnetic components, in particular electromagnetic coils or permanent magnets, arranged on an outer radial surface of the rotor shaft, wherein the rotor shaft comprises a first channel centrically extending on the rotor axis, and an inlet configured for feeding the first channel with coolant, wherein the electric motor comprises at least one outlet configured for discharging the coolant.

In some embodiments, the rotor shaft comprises a second channel extending with an offset parallel to the rotor axis and adjacent to the outer radial surface of the rotor shaft, a third channel connecting the first channel and the second channel by bridging the offset.

In some embodiments, the rotor shaft comprises a first outlet arranged outside the housing and a fourth channel connecting the second channel with the first outlet.

In some embodiments, the housing comprises a second outlet and wherein the rotor shaft comprises a fifth channel connecting the second channel with an interior of the housing.

In some embodiments, the housing comprises a second outlet and wherein the rotor shaft comprises a sixth channel connecting the first channel with the an interior of the housing.

In some embodiments, the rotor shaft comprises an outer shaft with a first through-hole, an inner shaft with a second through-hole forming at least a part of the first channel, the inner shaft arranged within the first through-hole, the second channel formed between the inner shaft and the outer shaft, and an output shaft connecting the inner shaft and the outer shaft at a first end and comprising the inlet.

In some embodiments, the rotor shaft comprises an adapter shaft connecting the inner shaft and the outer shaft at a second end opposing the first end, the adapter shaft comprising the third channel.

In some embodiments, the second channel is formed by at least a part of an inner radial surface of the outer shaft and by at least a part of an outer radial surface of the inner shaft.

In some embodiments, the rotor shaft comprises an intermediary shaft with a third through-hole, the intermediary shaft being arranged within the first through-hole of the outer shaft, the inner shaft being arranged within the third through-hole of the intermediary shaft, the second channel formed between the intermediary shaft and the outer shaft, and the output shaft connecting the inner shaft, the intermediary shaft, and the outer shaft at the first end, and wherein the rotor shaft comprises an adapter shaft connecting the inner shaft, the intermediary shaft, and the outer shaft at a second end opposing the first end, the adapter shaft comprising the third channel.

In some embodiments, an outer radial surface of the inner shaft and an inner radial surface of the intermediary shaft form a hollow space, in particular wherein the hollow space is filled with an insulating medium.

In some embodiments, the second channel is formed by at least a part of an inner radial surface of the outer shaft and by at least a part of an outer radial surface of the intermediary shaft.

In some embodiments, the rotor shaft is mounted in the housing by a first radial bearing and a second radial bearing, the first radial bearing being arranged on the adapter shaft and the second radial bearing being arranged on the output shaft.

In some embodiments, the rotor shaft comprises an outer shaft with a first through-hole and a hollow needle forming at least part of the first channel and arranged within the first through-hole, in particular wherein an outer radial surface of the hollow needle and an inner radial surface of the outer shaft form a hollow space, in particular wherein the hollow space is filled with an insulating medium.

In some embodiments, the hollow needle is mounted in the rotor shaft so as to allow the rotor shaft to rotate relative to the hollow needle.

In some embodiments, a cross-sectional area of the first channel is adapted to limit the amount of coolant within the electric motor to a limit value.

### FURTHER ASPECTS

In some embodiments, the third channel and/or the fourth channel is formed by two succeeding bore holes which are inclined relative to each other.

In some embodiments, the first outlet is arranged on an outer radial surface of the output shaft.

In other embodiments, the first outlet is arranged on a front surface or face surface of the output shaft.

In some embodiments, the second radial bearing is arranged, with regard to a direction parallel to the rotor axis, between the first outlet and the magnetic components.

In some embodiments, the fifth channel leads to a location on an outer radial surface of the output shaft, said location situated, with regard to a direction parallel to the rotor axis, between the second radial bearing and the magnetic components.

In some embodiments, the second channel is formed by at least a part of an inner radial surface of the outer shaft and by at least a part of an outer radial surface of the output shaft.

In some embodiments, the second channel is formed by at least a part of an inner radial surface of the outer shaft and by at least a part of an outer radial surface of the adapter shaft.

### BRIEF DESCRIPTION OF THE DRAWINGS

By way of example only, preferred embodiments of the invention will be described more fully hereinafter with reference to the accompanying figures, wherein:
Figure 1 shows an embodiment of an electric motor according to the invention;
Figure 2 shows detailed views of aspects of another embodiment of an electric motor according to the invention;
Figures 3-6 show further embodiments of an electric motor according to the invention;

### DETAILED DESCRIPTION OF THE DRAWINGS

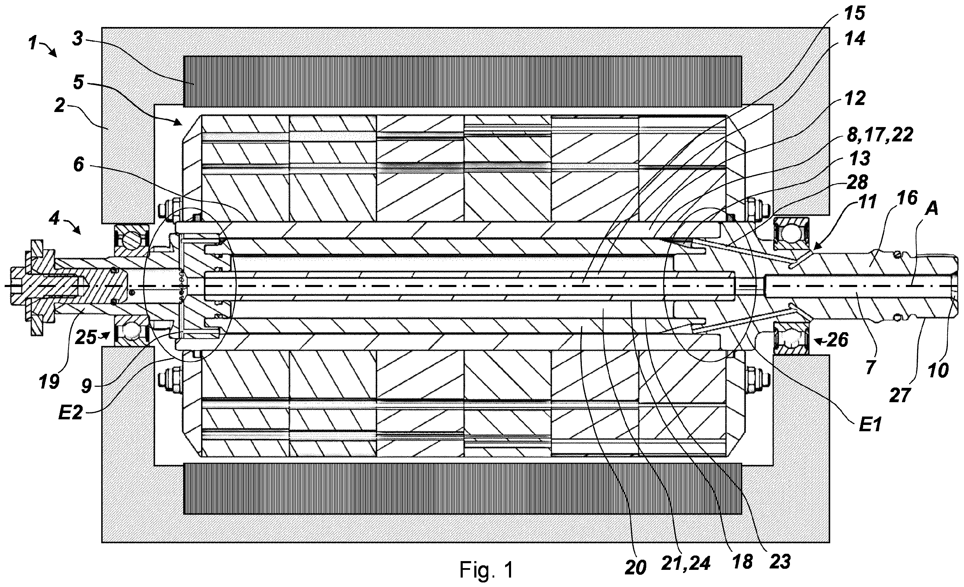

Figure 1 shows a sectional view of an exemplary embodiment 1 of an electric motor according to the invention. A housing 2 and a stator 3 arranged therein are shown abstractedly. The rotor shaft 4 is mounted in the housing 2 by the bearings 25 and 26. A rotor stack 5, comprising electromagnetic coils or magnets (e.g. surface mounted or buried), is arranged on the rotor shaft 4. By interaction between the stator 3 and the rotor 5 by known methods of actuation, the rotor shaft 4 is driven around the rotor axis A as it is rotatably mounted in the housing 2.

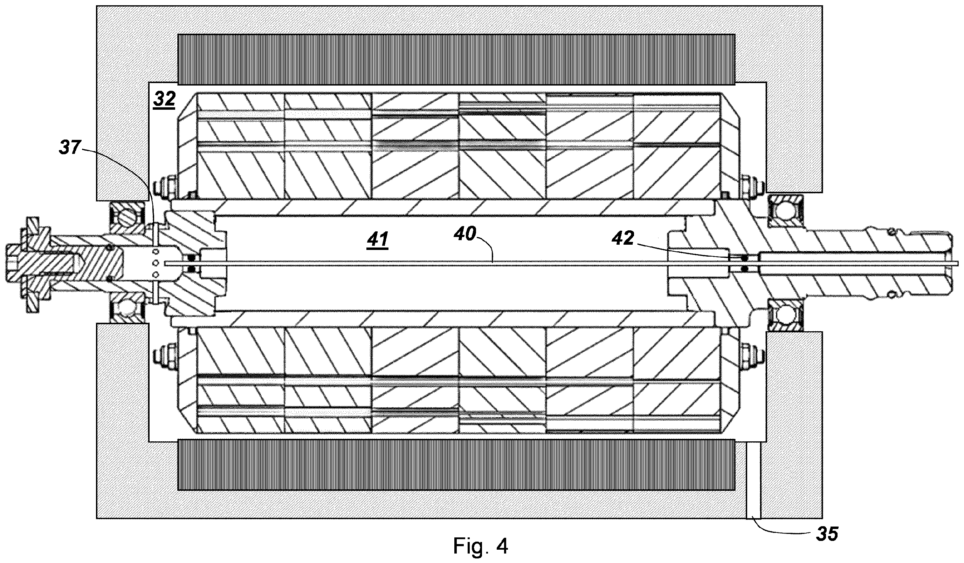

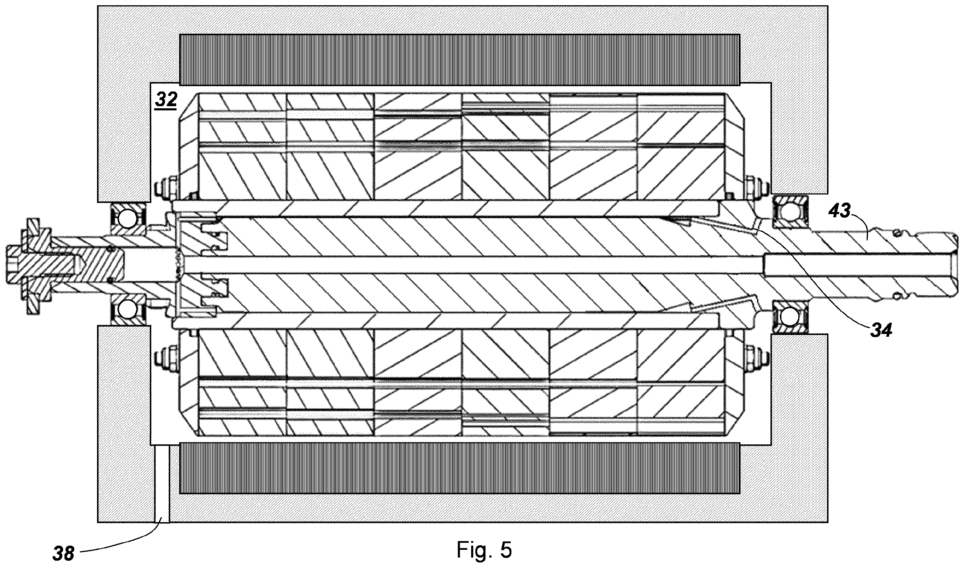

In this specific embodiment, the rotor shaft 4 comprises five components in order to achieve lower production costs. Other embodiments may have fewer components or even a one-piece rotor shaft where the channels are entirely realized with bore holes. For example, figure 4 and 5 show alternative concepts.

The rotor shaft 4 shown in figure 1 is an assembly of three hollow shafts (outer, intermediary, and inner shaft) and two studs (adapter shaft and output shaft). The output shaft 16 comprises the seat for the radial bearing 26, and both an inlet 10 and an outlet 11 for a cooling circuit. For example, the inlet 10 could be connected to a coolant supply by a rotary joint, whereas the heat removing coolant draining from the outlet 11 could be collected by a container adapted in shape (embracing the output shaft 16 in the region of the outlet 11).

The output shaft 16, the inner shaft 14, and the adapter shaft 19 share a central bore hole, which is referred to herein as first channel 7, along the rotor axis A. At the inlet 10, coolant (e.g. oil) is pumped into the first channel 7. From a through-hole of the output shaft 16, the coolant is flowing through a through-hole 15 of the inner shaft 14, and from there into a through-hole of the adapter shaft 19. In this example, the adapter shaft 19 is closed at the end by a resolver used for controlling the motor 1.

From the inside of the adapter shaft 19, the coolant flows on into a third channel 9, which in this example comprises a plurality of radial channels drilled into the adapter shaft in a 90 degree angle relative to the rotor axis A (of course other angles are possible). The third channel 9 here further comprises succeeding bore holes aligned parallel to the rotor axis A (also here, other angles are possible). The latter bore holes can be machines quite easily from the face of the adapter shaft 19. The radial bore holes need either be closed at the outer radial surface (e.g. by welding a stopper), or, as is shown here, they are covered by the outer shaft 12. By this third channel 9, the coolant is redirected into the second channel 8. In the shown example, the second channel 8 is hollow-cylindrical and formed by an inner radial surface 17 of the outer shaft 12 and an outer radial surface 22 of the intermediary shaft 20. In a different embodiment, where there is no intermediate shaft, the second channel could also be formed by the inner radial surface 17 of the outer shaft 12 and an outer radial surface 18 of the inner shaft 14.

Instead of being hollow-cylindrical, the second channel could be a plurality of channels distributed along the perimeter of the intermediary shaft, or respectively of the outer shaft, by either or both of the intermediary and outer shaft being machined having axially extending teeth. In other words, the second channel 8 could be a perfect hollow-cylinder, or could be formed by axial grooves in the inner radial surface 17 of the outer shaft 12 and/or the respective counter surface 22 or 18. The coolant travels close to the mounting place 6 of the rotor stack 5 where heat is generated. The outer shaft 12 may be of a material providing high thermal conduction so that the heat is optimally dissipated by the coolant.

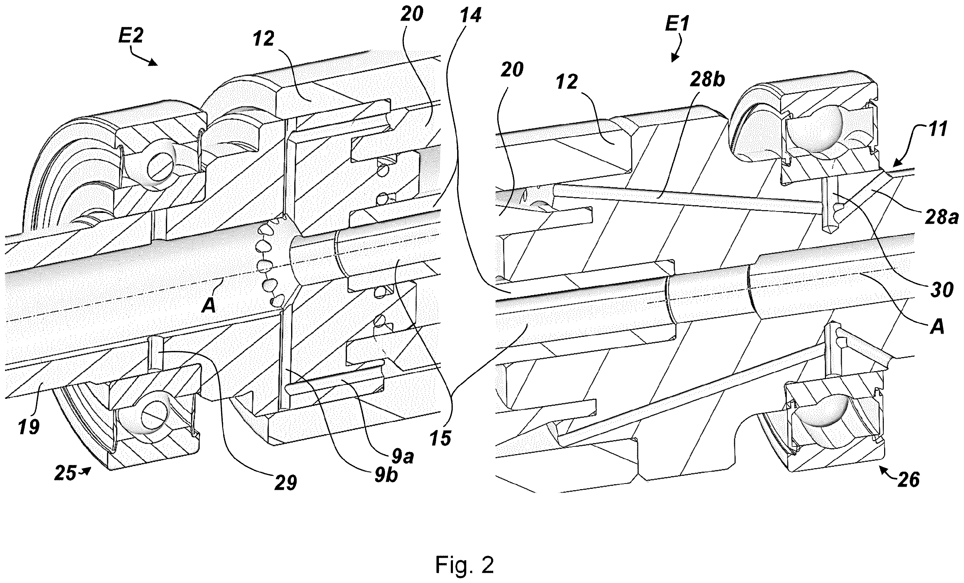

The outer shaft 12, the intermediary shaft 20, and the output shaft 16 are so arranged that the coolant then enters a fourth channel 28 drilled into the output shaft 12. The fourth channel 28 connects the second channel 8 with the outlet 11. The fourth channel 28 is particularly a combination of two succeeding bore holes 28a and 28b (see figure 2), which are inclined relative to each other in order to bypass the bearing 26. The heated coolant dispatched from the outlet is then cooled and fed back to the inlet 10. The outlet is arranged on the outer radial surface 27 past the bearing 26 outside the housing 2.

A hollow space 24 established between the inner shaft 14 and the intermediary shaft 20 may be used to thermally separate the first channel 7 from the second channel 8. The hollow space 24 can be filled with air, a special gas, or with some other sort of insulating medium.

Figure 2 shows detail views of the first end E1 and the second end E2 of an embodiment slightly differing from the embodiment of figure 1. A difference is that, additionally, heat sinks for the bearings are provided. The bore holes 29 are machined into the adapter shaft 19 so that the coolant can also reach the inner ring of the radial bearing 25 to remove heat from there. Bore holes 30 are provided so that the coolant reaches the inner ring of radial bearing 26. The bore holes 30 are particularly provided as a branch of the fourth channel 28. Fourth channel 28 is preferably a set of multiple radially symmetric bore holes machined into the output shaft 16 under an angle relative to the axis A.

Specifically, at least the first channel 7, in particular all channels, is/are dimensioned to provide a defined oil flow in order to avoid imbalances and to generally reduce the total mass in the motor.

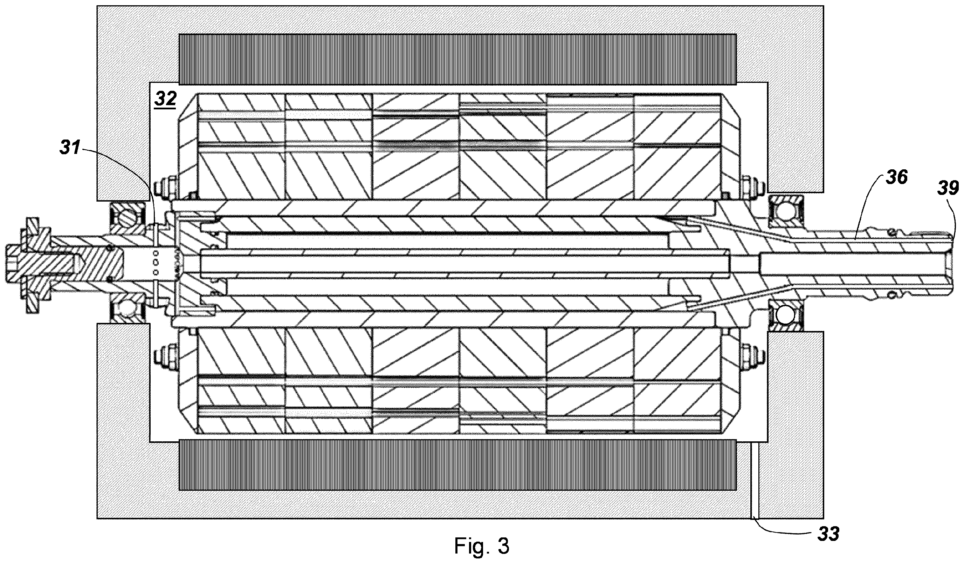

Figures 3 to 5 show further embodiments, wherein parts that are shared with the embodiment shown in figure 1 are not labelled in order to improve eligibility. Parts or configurations differing from the embodiment shown in figure 1 are labeled with new numeral references.

The electric motor shown in figure 3 has two outlets 39 and 33. The channels 36 lead to the outlet 39, which is arranged on the front face of the output shaft 16 and circularly surrounds the inlet 11. With suitable rotary joints, the inflow and outflow of coolant could be realized in one single, simplified unit. The second outlet 33 is arranged on the bottom of the housing 2. The reason for this is yet another construction difference relative to figure 1: The adapter shaft 19 further comprises channels 31 also distributing coolant into the interior 32 of the housing 2. The coolant therefore in part also flows between rotor and stator to cool down the area. Specifically, the relative rotation between rotor and stator picks up the coolant so that it is evenly distributed throughout the housing. Excess coolant then leaves the housing through the drain leading to outlet 33. Although this embodiment shows a combination of several differences relative to figure 1, the single differences are not limited to this combination and can be used separately in other embodiments.

Figure 4 shows a further embodiment having a hollow needle 40 forming the first channel. For example to reduce inertia, the rotor shaft 4 does not have an inner shaft, nor an intermediary shaft. The needle 40 is mounted by supports 42 in the output shaft and in the adapter shaft. These supports could rigidly hold the needle, or they could manage to allow rotation of the needle so that the needle can be stationary while the rotor shaft rotates. In variant of this embodiment, the needle 40 could be equipped with a star-shaped adapter in the chamber of the adapter shaft 19 for funneling the coolant into the channels 37. In yet another variant of this embodiment, said chamber may only exist in that the channels 37 are meeting there in the center of the adapter shaft 19.

Back to what is shown in figure 4, further differences as opposed to the embodiment of figure 1 are that there is at least one channel 37 to lead the coolant into the housing, and that there is no third and second channel leading the coolant along the surface of the outer shaft 12. Consequently, only the interior 32 of the housing 2 is cooled by the coolant and there is only one outlet 35 in the housing. Although this embodiment shows a combination of several differences relative to figure 1, the single differences are not limited to this combination and can be used separately in other embodiments.

Figure 5 shows an embodiment where the coolant flows through the motor in a similar way as in figure 1, only that the coolant is released into the interior 32 of the housing 2 instead of directed outside through the output shaft. For this to happen, the output shaft 43 has channels 34 to guide the coolant from the second channel into the interior 32. The output shaft 43 differs from the output shaft 16 in figure 1 in that is extending almost all the way through the rotor and is configured to be plugged with the adapter shaft 19. The second channel is thus formed by the output shaft and the outer shaft. For transporting the coolant out of the housing 2, there is an outlet 38, this time at the other end of the housing bottom, so that the coolant can access all parts of the stator and rotor. Although this embodiment shows a combination of several differences relative to figure 1, the single differences are not limited to this combination and can be used separately in other embodiments.

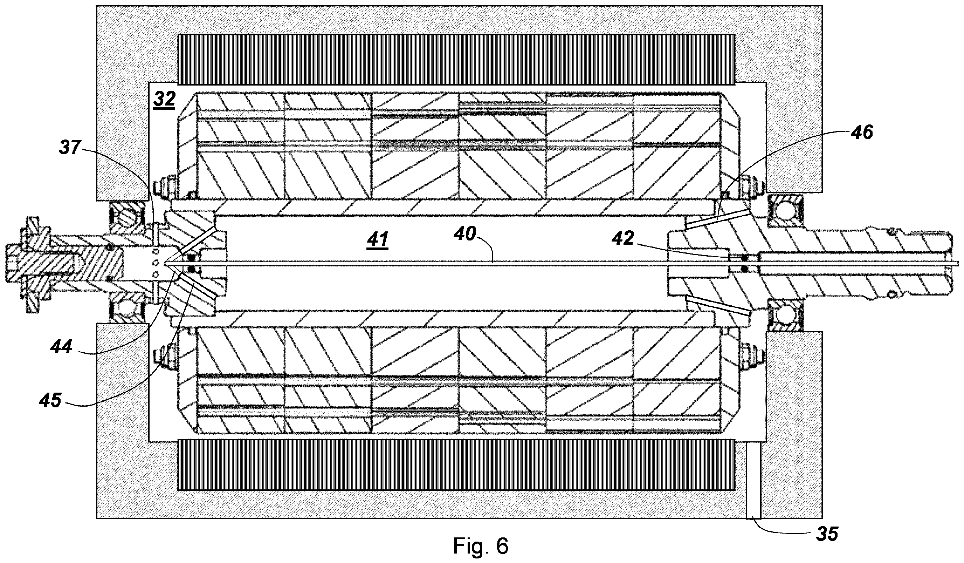

Figure 6 shows yet another embodiment of the invention. It has parallels with the embodiment shown in figure 4, wherein at least one back flow pipe 44 attached to or as part of the needle 40 are guiding the coolant through the channels 45 back into the hollow space 41, from where it drains through at least one channel 46 into the housing interior 32. On the way through the hollow space 41, the coolant will flow along the inside wall due to the centrifugal force induced by the rotor rotation. This way, the coolant effectively dispatches the heat emitted by the rotor stack 5 (magnetic components). The holes 37 still shown in figure 6 allow some of the coolant to go the way as described with figure 4. A special design of the needle outlet, the pipes 44, the channels 45, and/or the channels 37 with regard to e.g. diameter allows the defined distribution of the coolant. A further embodiment that is not shown is based on the embodiment in figure 6, where the channels 37 are omitted. In a further embodiment, the channel 46 could be altered into a channel like channel 36 in figure 3 or channel 28 in figure 1.

Although the invention is illustrated above, partly with reference to some preferred embodiments, it must be understood that numerous modifications and combinations of different features of the embodiments can be made. All of these modifications lie within the scope of the appended claims.

## Claims

1. An electric motor (1) comprising
a housing (2),
a stator (3) arranged in the housing,
a rotor shaft (4) mounted in the housing and configured for rotating around a rotor axis (A),
magnetic components (5), in particular electromagnetic coils or permanent magnets, arranged on an outer radial surface (6) of the rotor shaft,
**characterized in that** the rotor shaft comprises
a first channel (7) centrically extending on the rotor axis, and
an inlet (10) configured for feeding the first channel with coolant,
wherein the electric motor comprises at least one outlet (11,33,35) configured for discharging the coolant.

2. The electric motor (1) according to claim 1, wherein the rotor shaft (4) comprises
a second channel (8) extending with an offset parallel to the rotor axis and adjacent to the outer radial surface (6) of the rotor shaft (4),
a third channel (9) connecting the first channel and the second channel by bridging the offset.

3. The electric motor (1) according to claim 2, wherein the rotor shaft (4) comprises a first outlet (11,39) arranged outside the housing (2) and a fourth channel (28,36) connecting the second channel (8) with the first outlet.

4. The electric motor (1) according to claim 2 or 3, wherein the housing (2) comprises a second outlet (33,35,38) and wherein the rotor shaft (4) comprises a fifth channel (34) connecting the second channel (8) with an interior (32) of the housing.

5. The electric motor (1) according to any of the preceding claims, wherein the housing (2) comprises a second outlet (33,35,38) and wherein the rotor shaft (4) comprises a sixth channel (31,37) connecting the first channel with the an interior (32) of the housing.

6. The electric motor (1) according to any of the preceding claims, wherein the rotor shaft (4) comprises
an outer shaft (12) with a first through-hole (13),
an inner shaft (14) with a second through-hole (15) forming at least a part of the first channel (7), the inner shaft arranged within the first through-hole, the second channel (8) formed between the inner shaft and the outer shaft, and
an output shaft (16) connecting the inner shaft and the outer shaft at a first end (E1) and comprising the inlet (10).

7. The electric motor (1) according to claim 6, wherein the rotor shaft (4) comprises an adapter shaft (19) connecting the inner shaft (14) and the outer shaft (12) at a second end (E2) opposing the first end (E1), the adapter shaft comprising the third channel (9,37).

8. The electric motor (1) according to claim 6 or 7, wherein the second channel (8) is formed by at least a part of an inner radial surface (17) of the outer shaft (12) and by at least a part of an outer radial surface (18) of the inner shaft (14).

9. The electric motor (1) according to claim 6 or 7, wherein the rotor shaft (4) comprises an intermediary shaft (20) with a third through-hole (21), the intermediary shaft being arranged within the first through-hole (13) of the outer shaft (12), the inner shaft (14) being arranged within the third through-hole of the intermediary shaft, the second channel (8) formed between the intermediary shaft and the outer shaft, and the output shaft (16) connecting the inner shaft, the intermediary shaft, and the outer shaft at the first end (E1), and wherein the rotor shaft (4) comprises an adapter shaft (19) connecting the inner shaft (14), the intermediary shaft (20), and the outer shaft (12) at a second end (E2) opposing the first end (E1), the adapter shaft comprising the third channel (9).

10. The electric motor (1) according to claim 9, wherein an outer radial surface (18) of the inner shaft (14) and an inner radial surface (23) of the intermediary shaft (20) form a hollow space (24), in particular wherein the hollow space (24) is filled with an insulating medium.

11. The electric motor (1) according to claim 9 or 10, wherein the second channel (8) is formed by at least a part of an inner radial surface (17) of the outer shaft (12) and by at least a part of an outer radial surface (22) of the intermediary shaft (20).

12. The electric motor (1) according to any of claims 7 to 11, wherein the rotor shaft (4) is mounted in the housing (2) by a first radial bearing (25) and a second radial (26) bearing, the first radial bearing being arranged on the adapter shaft (19) and the second radial bearing being arranged on the output shaft (16).

13. The electric motor (1) according to any of claims 1 to 5, wherein the rotor shaft (4) comprises
an outer shaft (12) with a first through-hole (13) and
a hollow needle (40) forming at least part of the first channel (7) and arranged within the first through-hole, in particular wherein an outer radial surface of the hollow needle (40) and an inner radial surface (17) of the outer shaft (12) form a hollow space (41), in particular wherein the hollow space (41) is filled with an insulating medium.

14. The electric motor (1) according to claim 11, wherein the hollow needle (40) is mounted in the rotor shaft (4) so as to allow the rotor shaft to rotate relative to the hollow needle.

15. The electric motor (1) according to any of the preceding claims, wherein a cross-sectional area of the first channel (7) is adapted to limit the amount of coolant within the electric motor to a limit value.
